# EUROPEAN PATENT SPECIFICATION

(11) **EP 4 322 682 B1**
(45) Date of publication and mention of the grant of the patent: **02.12.2026**
(21) Application number: 23203398.5
(22) Date of filing: 31.10.2016
(51) Int. Cl.: H04W 72/1268, H04W 72/23, H04L 5/00

(54) **METHODS AND APPARATUS FOR SCHEDULING IN UPLINK**
VERFAHREN UNO VORRICHTUNG ZUR PLANUNG IN UPLINK
PROCEDES ET APPAREIL PERMETTANT DE PLANIFIER EN LIAISON MONTANTE

(30) Priority: 03.11.2015 US 201562250183 P
(43) Date of publication of application: 14.02.2024
(62) Document number(s) of the earlier application(s) in accordance with Art. 76 EPC: 20198283.2 / 3 809 781; 16794768.8 / 3 372 034
(73) Proprietor: Telefonaktiebolaget LM Ericsson (publ), 164 83 Stockholm (SE)
(72) Inventor: SAHLIN, Henrik, 435 41 Mölnlycke (SE); LI, Jingya, 417 58 Göteborg (SE); SUN, Ying, 183 60 Täby (SE); WIKSTRÖM, Gustav, 187 30 Täby (SE); MÄÄTTÄNEN, Helka-Liina, 02360 Espoo (FI)
(74) Representative: Ericsson

(56) References cited:
- ERICSSON: "Study of shorter TTI for latency reduction", vol. RAN WG2, no. Malmö, Sweden; 20151005 - 20151009, 4 October 2015 (2015-10-04), XP051005229, Retrieved from the Internet <URL:http://www.3gpp.org/ftp/Meetings_3GPP_SYNC/RAN2/Docs/> [retrieved on 20151004]

## Description

### TECHNICAL FIELD

The disclosure relates to scheduling in uplink of a wireless communication network, and more specifically to scheduling when a network node applies a short TTI (Transmission Time Interval) scheduling interval.

### BACKGROUND

Packet data latency is one of the performance metrics that vendors, operators and also end-users (via speed test applications) regularly measure. Latency measurements are done in all phases of a radio access network system lifetime, when verifying a new software release or system component, when deploying a system and when the system is in commercial operation.

One performance metric that guided the design of Long Term Evolution, LTE, was better latency than previous generations of Radio Access Technologies, RATs, defined by the Third Generation Partnership Project, 3GPP. LTE is also now recognized by the end-users to be a system that provides faster access to Internet and lower data latencies than previous generations of mobile radio technologies.

Packet data latency is important not only for the perceived responsiveness of the system; it is also a parameter that indirectly influences the throughput of the system. Hyper-Text Transport Protocol / Transport Control Protocol, HTTP/TCP, is the dominant application and transport layer protocol suite used on the Internet today. According to HTTP Archive, http://httparchive.org/trends.php, the typical size of HTTP-based transactions over the Internet range from a few 10s of Kbytes up to 1 Mbyte. In this size range, the TCP slow start period is a significant part of the total transport period of the packet stream. During TCP slow start, the "congestion window" used by TCP for defining the amount of traffic that can be outstanding, i.e., transmitted but not acknowledged, and packet latency limits how quickly the congestion window can be optimized. Hence, improved latency improves the average throughput for these types of TCP-based data transactions.

Radio resource efficiency in general is positively impacted by latency reductions. Lower packet data latency could increase the number of transmissions possible within a certain delay bound; hence higher Block Error Rate (BLER) targets could be used for the data transmissions freeing up radio resources potentially improving the capacity of the system.

Here, a "scheduling interval" is the smallest unit of time allocated when scheduling resources. In LTE, scheduling intervals are referred to as Transmission Time Intervals (TTI). One area to address when it comes to packet latency reductions is the reduction of transport time for data and control signaling, by addressing the length of a TTI. In LTE release 8, a TTI corresponds to one subframe (SF) of length 1 millisecond. One such 1 ms TTI is constructed by using 14 OFDM (Orthogonal Frequency Division Multiplexing) or SC-FDMA (Single Carrier Frequency Division Multiple Access) symbols in the case of normal cyclic prefix (CP) and 12 OFDM or SC-FDMA symbols in the case of extended CP. For LTE release 13, 3GPP is studying the use of transmissions in TTIs that are much shorter than the LTE release 8 TTI.

For this disclosure, it is assumed that the TTIs may be shortened compared to the release 8 TTI, by introducing a sub-subframe (SSF) concept, also denoted short TTI (sTTI). These shorter TTIs or sTTIs (also known as SSFs) can be decided to have any duration in time and comprise resources on a number of OFDM or SC-FDMA symbols within a 1 ms SF. As one example, the duration of the SSF may be 0.5 ms, i.e. seven OFDM or SC-FDMA symbols for the case of normal CP.

### Uplink scheduling grants

The existing physical layer downlink control channels, Physical Downlink Control Channel (PDCCH) and enhanced PDCCH (ePDCCH), are used to carry Downlink Control Information (DCI) such as scheduling decisions and power control commands. Both PDCCH and ePDCCH are transmitted once every subframe (SF) of 1ms. Throughout this disclosure, short PDCCH (sPDCCH) is used to denote downlink physical control channels transmitted once every SSF. Similarly, short Physical Downlink Shared Channel (sPDSCH) and short Physical Uplink Shared Channel (sPUSCH) are used to denote the downlink and uplink physical shared channels transmitted once every SSF, respectively.

There are currently a number of different Downlink Control Information (DCI) formats for uplink and downlink resource assignments, as specified in 3GPP TS 36.212 (Rel 10) V 12.6.0, section 5.3.3.1. Uplink scheduling grants use either DCI format 0 or DCI format 4. The latter DCI format 4 is added in Release 10 for supporting uplink spatial multiplexing.

In general, the DCI for an uplink (UL) scheduling grant contains:
- Resource allocation information
   ∘ Carrier indicator
   ∘ Resource allocation type
   ∘ Resource block allocation
- RS and data related information
   ∘ Modulation and coding scheme (MCS)
   ∘ New data indicator
   ∘ Cyclic shift of the uplink demodulation reference signals (DMRS)
   ∘ Precoding information
   ∘ Transmit power control
- Other information
   o Sounding Reference Signal (SRS) request
   o Channel State Information (CSI) request
   o UL index (for Time Division Duplex (TDD))
   o DCI format 0/1A indication (only in DCI format 0 and 1A)
   o Padding
   o Cyclic Redundancy Check (CRC) scrambled with Radio Network Temporary Identifier (RNTI) of the terminal

### Dynamic switching between SSF lengths

As mentioned, one way to reduce latency is to reduce the TTI. Instead of assigning resources for a time duration of 1 ms, i.e. for a subframe, resources may be assigned for a shorter duration than one subframe, i.e. for a SSF. The shorter duration or SSF may e.g. be defined in number of OFDM or SC-FDMA symbols. This implies a need for UE (User Equipment) specific control signaling that enables an indication of such shorter scheduling assignments.

Furthermore, there is also a need to be able to dynamically switch between different TTI or SSF durations, such as between the legacy 1 ms TTI and shorter TTIs, as well as between different shorter TTIs. This is needed in order to optimize the spectral efficiency, since shorter TTIs may incur higher overhead and/or worse demodulation performance.

### Potential problem with existing approaches

The existing way of operation, e.g. frame structure and control signaling, are designed for data allocations in a fixed length subframe of 1 ms, which may vary only in allocated bandwidth. Specifically, the current DCIs define resource allocations within the entire subframe.

Other related art in the technical field is disclosed in "ERICSSON: "Study of shorter TTl for latency reduction",3GPP DRAFT; R2-154740". The document relates to the use of shorter TTIs for latency reduction. The document does not disclose any details about UL grant signaling for the different shorter TTI alternatives disclosed.

### SUMMARY

It is therefore an object to address some of the problems outlined above, and to provide solutions for allowing dynamic configuration of a short scheduling interval duration for uplink transmissions.

According to aspects, this object and others are achieved by a method performed by a base station (BS) such as an eNodeB, and a method performed by a User Equipment (UE). Furthermore, a BS and a UE adapted to perform the methods are provided. Thus, methods and apparatus according to the appended independent claims are provided.

There are a number of effects as a result of the various embodiments presented herein:
- Flexible and fast configuration of SSFs.
- Possibility to schedule and transmit reference signals such as DMRS without user data, and user data without reference signals.
- Low control signaling overhead by having a slow common grant, i.e. a frequency allocation grant, and a combined reference signal and data fast grant.
- Fast grants distributed over several downlink symbols, to avoid the case where one symbol is highly loaded with control information.
- Low complexity for handling corner cases by using a combined reference signal and data grant.

It is to be noted that the terms sTTI and SSF refer to the same concept and are equivalent. Hence, whenever the term SSF is used, this can be exchanged with sTTI, and vice versa.

Other objects, advantages and features of embodiments will be explained in the following detailed description when considered in conjunction with the accompanying drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
Figure 1 is a schematic diagram illustrating an environment in which embodiments presented herein can be applied.
Figure 2 is a schematic illustration of the use of fast uplink grants for different sPUSCHs according to various embodiments.
Figure 3 is a flowchart illustrating the method in a network node according to various embodiments.
Figure 4 is a flowchart illustrating the method in a wireless device according to various embodiments.
Figure 5 is a block diagram schematically illustrating a network node and a wireless device according to various embodiments.
Figure 6 is a schematic diagram showing functional modules of the wireless device of Figure 5 according to one embodiment.
Figure 7 is a schematic diagram showing functional modules of the network node of Figure 5 according to one embodiment.
Figure 8 shows one example of a computer program product comprising computer readable means.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

In the following, different aspects will be described in more detail with references to certain embodiments and to accompanying drawings. For purposes of explanation and not limitation, specific details are set forth, such as particular scenarios and techniques, in order to provide a thorough understanding of the different embodiments. However, other embodiments that depart from these specific details may also exist.

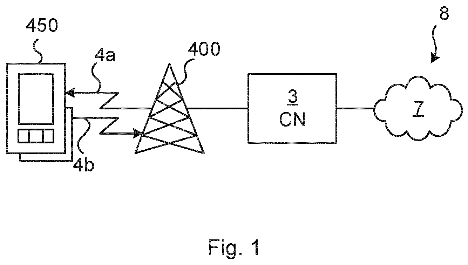

Figure 1 is a schematic diagram illustrating an environment in which embodiments presented herein can be applied.

Embodiments are described in a non-limiting general context in relation to an example scenario in a communication network 8 being implemented using LTE, where an eNodeB schedules a UE in uplink by sending uplink grants in DCI. However, it should be noted that the embodiments may be applied to any network technology with similar procedures for scheduling in uplink. The DCI may be any type of control information, and the DMRS can be any type of reference signal. Furthermore, in the example scenarios described herein, the eNodeB and UE use a signal structure that defines transmission subframes divided into OFDM or SC-FDMA symbols. The wireless device 450 is scheduled in uplink in sub-subframe scheduling intervals, where an uplink sub-subframe comprises one or more SC-FDMA symbols. However, the embodiments may be applied to symbols with other symbol periods.

In some embodiments, a more general term "network node" 400 is used and it can correspond to any type of radio network node or any network node, which communicates with a UE and/or with another network node. Examples of network nodes are NodeB, base station (BS), multi-standard radio (MSR) radio node such as MSR BS, eNodeB, network controller, radio network controller (RNC), base station controller (BSC), relay, donor node controlling relay, base transceiver station (BTS), access point (AP), transmission points, transmission nodes, nodes in distributed antenna system (DAS), and a core network node.

The radio network node 400 is also connected to the core network 3 for connectivity to central functions and a wide area network 7, such as the Internet.

In some embodiments the non-limiting term UE 450 is used and it refers to any type of wireless device communicating with a network node and/or with another UE in a cellular or mobile communication system. Examples of UE are target device, device to device (D2D) UE, machine type UE or UE capable of machine to machine (M2M) communication, PDA, PAD, Tablet, mobile terminals, smart phone, laptop embedded equipped (LEE), laptop mounted equipment (LME), USB dongles etc.

Over the wireless interface between the network node 400 and the wireless device 450, downlink (DL) communication 4a occurs from the radio network node 1 to the wireless device 2 and uplink (UL) communication 4b occurs from the wireless device 2 to the radio network node 1. The quality of the wireless radio interface to each wireless device 2 can vary over time and depending on the position of the wireless device 2, due to effects such as fading, multipath propagation, interference, etc.

One way to support SSF configuration is to define a new DCI format for SSF control using PDCCH. The new DCI format may be defined to support SSF configuration by introducing a time domain split field. However, if such a new DCI format is designed based on the use of PDCCH, SSF scheduling decisions can only be made per subframe as PDCCH is transmitted only once every subframe.

In another suggested solution, the DCI for an uplink grant is divided into two parts. One part is referred to as a slow grant or slow DCI, and the other part as a fast grant or fast DCI. The slow grant contains frequency resource allocation information. This slow grant is transmitted on a subframe basis in downlink. The slow grant is common for a group of wireless devices or UEs 450. The fast grant is device or UE specific, and it is transmitted on symbol basis in downlink. The fast grant may thus vary between different SSFs. Dynamic configuration of the SSF duration for an uplink transmission is performed based on the information conveyed in the fast grant. The fast grant or DCI may be conveyed to the wireless terminal UE 450 using an sPDCCH transmission(s). The wireless terminal UE 450 may monitor different sPDCCH candidate resources and attempt to decode an sPDCCH transmission intended for itself. If successful, the fast grant or DCI from the sPDCCH (together with the slow grant or DCI) may be used to determine an sPDSCH DL assignment or sPUSCH UL grant for the UE. In uplink transmissions, one or more SC-FDMA symbols with reference signals transmitted for each TTI leads to an increased overhead and a corresponding decrease in data rates, when the length of the TTI is reduced.

In another solution, sPDSCH SSFs do not necessarily contain DMRS if recent DMRS transmissions to the same UE have occurred. In this solution, the presence of DMRS in a downlink SSF may thus be signaled in the sPDCCH. Alternatively, the UE tries to blindly decode the transmission under the two assumptions DMRS present or DMRS not present. This solution focuses on reducing reference signals in downlink transmissions where the eNodeB both schedules the downlink transmission and actually transmits the downlink transmission. For uplink transmissions, the eNodeB schedules the transmissions while the UE transmits them.

Therefore, according to another solution, flexible DMRS for SSF in uplink is enabled by introducing separate reference signal grants and data grants for each sPUSCH. This method allows for flexible and fast reconfiguration of SSFs, and it enables UEs to transmit DMRS without transmitting user data. However, separating reference signal and data grants increases the control signaling overhead. Moreover, it increases the complexity for handling of corner cases, where different types of grants are not correctly detected by the user.

In embodiments presented herein, increased control signaling overhead and complexity is addressed by using a fast uplink grant or fast DCI, in which positions and lengths of both RS and data symbols, as well as the length of the SSF are indicated.

In embodiments, said position and lengths are indicated with a symbol period granularity.

Such a fast uplink grant design enables flexible configuration of sPUSCHs transmitted in SSF. Furthermore, it enables scheduling of DMRS transmission without data transmission in a scheduling interval, as well as scheduling of data transmission without DMRS transmission.

### Proposed Fast Uplink Grant

The suggested fast uplink grant or fast DCI is transmitted on symbol basis in downlink and it is user-specific, i.e. specific for each wireless device 450. This fast uplink grant may comprise information related to both reference signal and data configuration for a sPUSCH. The fast uplink grant enables flexible configuration of a SSF, by indicating the positions and lengths of both reference signals and data symbols, as well as the length of the SSF.

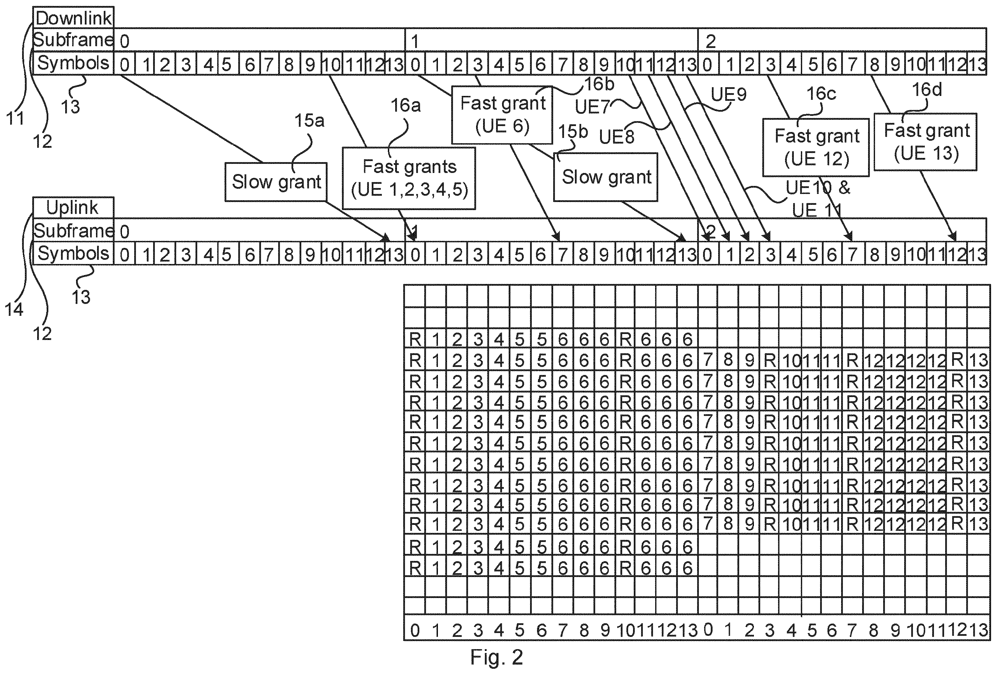

Figure 2 illustrates schematically the use of proposed fast uplink grants 16a-c for different sPUSCHs with different SSF lengths, considering normal cyclic prefix, according to one example embodiment. Hereinafter, the fast uplink grant also referred to as the fast DCI above, will be referred to as a fast grant for simplification. The upper section of Figure 2 shows downlink 11 and the lower section shows uplink 14. Time flows from left to right in Figure 2 and is synchronised between uplink 14 and downlink 11. Hence there are subframes 12, where each subframe comprises fourteen symbol periods 13.

For each subframe, there is a slow grant 15a-b, as described above. Additionally, there are fast grants 16a-d for one or more UEs, as shown.

In the lower section of Fig 2 illustrating the uplink, the lower table shown indicates the assignment of UEs to uplink radio resources, where each cell represents the transmission of one symbol. The character 'R' indicates the transmission of a reference signal.

In one embodiment, the fast grant is valid a fixed number of symbols after the transmission of the fast grant. Another way to formulate it is that the scheduling information in the fast grant is valid for a sub-subframe starting a defined number of symbols after the transmission of the control information message. This defined number of symbols may thus be pre-defined or preconfigured in the network and in the UE. In the example embodiment shown in Figure 2, it is assumed that the fast grant is valid 4 symbols after the transmission. Thus, the fast grants 16a for UEs 1, 2, 3, 4, and 5 are transmitted at symbol 10 of SF 0, and these grants are valid at symbol 0 of SF 1, i.e. four symbols after the transmission of the fast grant. Similarly, the fast grant of UE 6 is transmitted at symbol 3 of SF 1, and it is valid at symbol 7 of SF 1. The fast grant for UE 7 is transmitted at symbol 10 of SF 1 and it is valid at symbol 0 of SF2. The fast grant for UE 8 is transmitted at symbol 11 of SF 1 and it is valid at symbol 1 of SF2. The fast grant for UE 9 is transmitted at symbol 12 of SF 1 and it is valid at symbol 2 of SF2. The fast grants of UEs 10 and 11 are transmitted at symbol 13 of SF 1, and these grants are valid at symbol 3 of SF 2.

In another embodiment, a few bits are added in the fast grant to indicate when it is valid.

### Key parameters for SSF configuration

In the following, different example embodiments 1 to 6 of the SSF configuration are described. The first symbol of a certain SSF is defined as the symbol when the fast grant is valid.

### Example embodiment 1

In a first example embodiment, the SSF configuration is indicated by the following three parameters:
- DMRS position (rs_position_id): This parameter specifies the position of DMRS within a certain uplink SSF. The values of rs_position_id may e.g. include {1, 2, 3, 4, 5, 6, 7}, where rs_position_id=n indicates that DMRS is transmitted at the n-th symbol of this SSF. If more than one DMRS symbol per SSF needs to be specified, further bits may be added to the parameter according to one embodiment.
- Start position of data symbols (d_start_idx): This parameter indicates the starting position of the data symbols. The values of d_start_idx may e.g. include {1, 2, 3, 4, 5, 6, 7}, where d_start_idx=n indicates that data transmission is started from the n-th symbol of this SSF;
- Data length (d_length): This parameter indicates the length of the data part of the SSF. More specifically, the value of d_length denotes the number of symbols in time domain allocated for this uplink data transmission. The values of d_length may include {0, 1, 2, 3, 4, 5, 6, 13}.

Table 1 gives the corresponding values of the three parameters for the different UEs shown in Figure 2.

**Table 1: Values for example embodiment 1 for SSFs illustrated in Figure 2**

| | rs_position_id | d_start_idx | d_length |
|---|---|---|---|
| UE1 | 1 | 2 | 1 |
| UE2 | 1 | 3 | 1 |
| UE3 | 1 | 4 | 1 |
| UE4 | 1 | 5 | 1 |
| UE5 | 1 | 6 | 2 |
| UE6 | 4 | 1 | 6 |
| UE7 | 4 | 1 | 1 |
| UE8 | 3 | 1 | 1 |
| UE9 | 2 | 1 | 1 |
| UE10 | 1 | 2 | 1 |
| UE11 | 1 | 3 | 2 |
| UE12 | 1 | 2 | 4 |
| UE13 | 1 | 1 | 1 |

In one embodiment, d_length=0 is used to specify that only DMRS are scheduled for this SSF. Alternatively, a predefined value of d_length other than zero may be used for this purpose. In another embodiment, d_start_idx=0 is used to specify that only DMRSs are scheduled for this SSF. Alternatively, a predefined value of d_start_idx other than zero may be used for this purpose. In yet another embodiment, rs_position_id=0 is used to specify that no reference signal is transmitted in this SSF. Alternatively, a predefined value of rs_position_id other than zero may be used for this purpose. This can be useful if a reference signal is already transmitted in a previous SSF and the channel variations are small such that a channel estimate from the previous SSF can be used for the current SSF. In yet another embodiment, two or more values of rs_position_id are given, such that more than one DMRS symbol per SSF can be specified.

### Example embodiment 2

In a second example embodiment, the SSF configuration is indicated by three parameters, i.e., DMRS position (rs_position_id), Data length (d_length), and Cyclic Shift index for DMRS. The first two parameters are the same as specified in Example 1. The start position of data symbols (d_start_idx) in the SSF is, however, indicated by the DMRS cyclic shift index in this example embodiment. Table 2 gives an example of mapping cyclic shift index to start position of data symbols. Here, d_start_idx = n implies that data transmission is started from the n:th symbol of this SSF.

**Table 2: Mapping of cyclic shift index to start position of data symbols in a SSF**

| Cyclic shift index | d_start_idx |
|---|---|
| 0 | 1 |
| 1 | 2 |
| 2 | 3 |
| 3 | 4 |
| 4 | 5 |
| 5 | 6 |
| 6 | 7 |
| 7 | 8 |

In one embodiment, d_length=0 is used to specify that only DMRS are scheduled for this SSF. Alternatively, a predefined value of d_length other than zero may be used for this purpose. In another embodiment, rs_position_id=0 is used to specify that no reference signal is transmitted in this SSF. Alternatively, a predefined value of rs_position_id other than zero may be used for this purpose. In yet another embodiment, two or more values of rs_position_id are given, such that more than one DMRS symbol per SSF can be specified.

### Example embodiment 3

In a third example embodiment, the SSF configuration is indicated by the following three parameters:
• Time offset (time_offset > 0): The time offset in terms of number of symbols between the first symbol of the SSF and the target symbol position (i.e., the start position of data symbols or the position of DMRS).
• Shift flag (shift_flag): This parameter indicates whether time offset is applied to the data symbols or to DMRS. For example, if shift_flag = 0, then the time offset is applied to data symbols, and DMRS is placed at the first symbol of the SSF, and if shift_flag = 1, the time_offset applies to DMRS, and data transmission is started from the first symbol of this SSF. However, the shift flag could also be used in the opposite way, i.e. shift_flag=0 indicating that the time offset is applied to DMRS instead.
• Data length (d_length): as specified in Example embodiment 1.

**Table 3 Values for example embodiment 3 for SSFs illustrated in Figure 2**

| | time_offset | shift_flag | d_length |
|---|---|---|---|
| UE1 | 1 | 1 | 1 |
| UE2 | 2 | 1 | 1 |
| UE3 | 3 | 1 | 1 |
| UE4 | 4 | 1 | 1 |
| UE5 | 5 | 1 | 2 |
| UE6 | 3 | 0 | 6 |
| UE7 | 3 | 0 | 1 |
| UE8 | 2 | 0 | 1 |
| UE9 | 1 | 0 | 1 |
| UE10 | 1 | 1 | 1 |
| UE11 | 2 | 1 | 2 |
| UE12 | 1 | 1 | 4 |
| UE13 | 1 | 1 | 1 |

Table 3 gives the corresponding values of time_offset, shift_flag, and d_length for the different UEs shown in Figure 2. In one embodiment, d_length=0 is used to specify that only DMRS are scheduled for this SSF. In another embodiment, time_offset=0 and shift_flag=0 is used to specify that only DMRS are scheduled for this SSF. In yet another embodiment, time_offst = 0 and shift_flag =1 is used to specify that no DMRS is transmitted in this SSF. In a further embodiment, two or more values of time_offset are given, such that more than one reference signal per TTI can be specified.

### Example embodiment 4

In a fourth example embodiment, the SSF configuration is indicated by the following two parameters, starting position (start_idx) and data length (d_length):
- Starting position (start_idx): This parameter indicates the starting position of the data symbols and the starting position of the DMRS symbols within a certain uplink SSF. More specifically, whether a data symbol or a DMRS symbol is transmitted at the beginning of the SSF is determined by the sign of the value start_idx.
- If start_idx<0, then
   o Data starts at the first symbol of the SSF. The first symbol of the SSF is defined as the symbol where the fast grant is valid.
   o DMRS are transmitted |start_idx| symbols after the first symbol of the SSF. Here, |start_idx| denotes the absolute value of start_idx.
- If start_idx>0, then
   o DMRS are transmitted at the first symbol of the SSF.
   o Data starts at symbol start_idx of the SSF.

An example of a 3-bit mapping of start_idx is given in Table 4.

**Table 4 An example of 3-bit mapping of the parameter, start_idx**

| Starting position field | *start_idx* |
|---|---|
| 000 | -3 |
| 001 | -2 |
| 010 | -1 |
| 011 | 1 |
| 100 | 2 |
| 101 | 3 |
| 110 | 4 |
| 111 | 5 |

Data length (d_length): as specified in Example 1.

Table 5 gives the corresponding values of start_idx and d_length for the different UEs shown in Figure 2.

**Table 5 Values for example embodiment 4 for SSFs illustrated in Figure 2**

| | Start_idx | d_length |
|---|---|---|
| UE1 | 1 | 1 |
| UE2 | 2 | 1 |
| UE3 | 3 | 1 |
| UE4 | 4 | 1 |
| UE5 | 5 | 2 |
| UE6 | -3 | 6 |
| UE7 | -3 | 1 |
| UE8 | -2 | 1 |
| UE9 | -1 | 1 |
| UE10 | 1 | 1 |
| UE11 | 2 | 2 |
| UE12 | 1 | 4 |
| UE13 | 1 | 1 |

In one embodiment, two or more values of start_idx are given, such that more than one reference signal per TTI can be specified. In yet another embodiment, one value of start_idx is used to specify that no reference signal is transmitted in this TTI. This can be useful if a reference signal is already transmitted in a previous TTI and the channel variations are small such that a channel estimate from the previous TTI can be used for the current TTI. In yet another embodiment, d_length=0 is used to specify that only DMRS are scheduled for this SSF. In a further embodiment, the parameter d_length can be replaced by SSF_length, which specifies the length of the SSF. This embodiment is possible to combine with all of the described example embodiments herein.

### Example embodiment 5

In a fifth embodiment, the SSF configuration is indicated by one parameter (SSF_config_idx) to support a subset of SSF configurations with a small number of control information bits. Table 6 gives an example of mapping a value of SSF_config_idx (3 control information bits) to a SSF configuration.

**Table 6 The mapping table for obtaining a SSF configuration (example embodiment 5)**

| SSF_config_idx | SSF configuration |
|---|---|
| 0 | 1 data symbol, no DMRS |
| 1 | 1 DMRS symbol, no data |
| 2 | 1 DMRS symbol followed by 1 data symbol |
| 3 | 2 data symbols, no DMRS |
| 4 | 3 data symbols, no DMRS |
| 5 | 4 data symbols, no DMRS |
| 6 | 1 DMRS symbol followed by 4 data symbols |
| 7 | 3 data symbols followed by 1 DMRS symbol, and then 3 data symbols |

According to Table 6, the SSF configurations for UE1, 6, 10, and 12-13 in Figure 2 can be supported with the use of SSF_config_idx 2, 7, 2, 6, and 2, respectively. The configurations for UEs 2-5 and 7-9 can be handled by sending two grants, with e.g. SSF_config_idx 1 and 0, respectively, for UE 2. Also, more bits can be added to the SSF_config_idx filed if more cases need to be supported.

### Example embodiment 6

In another embodiment a direct bitmap is used to indicate both data symbols and DMRS symbols. That is, the field or bitmap directly tells the number of symbols the grant relates to as well as which symbols that are allocated by reference signals and/or data. The following sub-embodiments are possible:

### Example embodiment 6a)

The assignment start is fixed in relation to where the DCI is sent as described above, and the number of bits tells the total number of symbols assigned. In one example the value 1 is for data symbols and 0 is for DMRS. Table 7 shows an example of assigning SSF of a length of three symbols. Typically, there may be one DMRS allocation and one or more data allocations. However, depending on system requirements, the embodiment enables scheduling more than one DMRS if needed e.g. for reliability purposes. It can be noted that special cases may have other predefined fixed allocations and the table gives one example for SSF_config_idx=000.

**Table 7: The mapping table for obtaining a SSF configuration (emb. 6a)**

| SSF_config_idx | SSF configuration |
|---|---|
| 000 | one or more DMRS on predefined locations |
| 100 | one data, two DMRS symbols |
| 110 | two data symbols, one DMRS symbol |
| 101 | one data, one DMRS and one data symbol |
| 011 | one DMRS and two data symbols |
| 010 | one DMRS, one data, one DMRS |
| 001 | two DMRS, one data |
| 111 | 3 data symbols |

### Example embodiment 6b)

Example embodiment 6b) is a combination of Example embodiment 6a) and Example 5. There is SSF_ config index, which is a number or a bit stream corresponding to a bitmap. This is to enable indicating only subsets of bitmaps. Table 8 describes this option with an example of length three SSF indicated with 2 bits.

**Table 8 The mapping table for obtaining a SSF configuration (emb. 6b)**

| SSF_config_idx | bitmap | SSF configuration |
|---|---|---|
| 00 | 110 | two data symbols one DMRS symbol |
| 10 | 101 | one data, one DMRS and one data symbol |
| 01 | 011 | one DMRS and two data symbols |
| 11 | 111 | 3 data symbols |

### Example embodiment 6c)

In Example embodiment 6c) the SSF allocation can vary and the number of bits in the bitmap indicates the longest possible allocation. The assignment starts when indicated by the bits in the bitmap, and predefined rules indicate where DMRS is sent. Bit value 1 in the bitmap indicates that data or DMRS is allocated, and bit value 0 indicates no allocation. The DMRS positions in each allocation are predefined. Examples for the fixed or predefined DMRS positions are: DMRS is always sent in first or in the n:th assigned symbol; DMRS has predefined fixed position(s) within legacy subframe and when there is bit value 1 corresponding to a symbols that is pre-allocated to DMRS, the UE transmits DMRS on that symbol. Table 9 illustrates this example embodiment using separate SSF_config_idx and bitmap, but a direct bitmap may be used as well. In the example of table 9, it is assumed that DMRS is always sent in first symbols.

**Table 9: The mapping table for obtaining a SSF configuration (emb.6c)**

| SSF_config_idx | bitmap | SSF configuration |
|---|---|---|
| 00 | 11110 | one DMRS symbol followed by three data symbols starting from first indicated symbol |
| 10 | 00111 | one DMRS symbol followed by two data symbols starting from third indicated symbol |
| 01 | 01100 | one DMRS and one data symbols starting from second indicated symbol |
| 11 | 10110 | one DMRS starting with first indicated symbol and two data symbols starting with third indicated symbol |

### Example implementations of methods

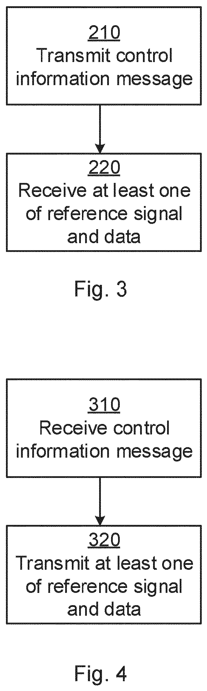

Figure 3 is a flowchart illustrating one embodiment of a method performed by a network node 400 of a wireless communication network for scheduling a wireless device 450 in uplink. An uplink signal structure used by the wireless device and the network node defines transmission subframes divided into symbol periods. The network node applies a sub-subframe (i.e. sTTI) scheduling interval, where a sub-subframe comprises at least one symbol period. Each sub-subframe is shorter than a subframe.

In a *transmit control information message* step 210, the network node transmits a control information message to the wireless device for a sub-subframe scheduling interval. The control information message comprises uplink scheduling information assigned to the wireless device. The uplink scheduling information indicates a position and a length for at least one of a reference signal and data in the uplink sub-subframe, as disclosed in more detail in embodiments 1 to 6 above.

In one embodiment, the control information message comprises scheduling uplink information indicating a position and a length of respective reference signal and data in the uplink sub-subframe.

In one embodiment, the uplink scheduling information also indicates a length of the uplink sub-subframe.

The control information message can be specific for the wireless device. In other words, each wireless device can receive its own control information messages.

In one embodiment, the uplink scheduling information indicates a position and a length only for a reference signal, e.g. in accordance with embodiments 5 and 6 above.

In one embodiment, the uplink scheduling information indicates a position and a length for a plurality of reference signals, e.g. in accordance with embodiments 5 and 6 above.

In one embodiment, the uplink scheduling information indicates a position and a length only for data, e.g. in accordance with embodiments 5 and 6 above. In other words, no reference signals are then assigned in that particular uplink scheduling information.

In an optional *receive at least one of reference signal and data* step 220, the network node receives at least one of reference signal and data from the wireless device in the uplink sub-subframe, according to the transmitted control information message.

The at least one of reference signal and data can be received on a short Physical Uplink Shared Channel, sPUSCH, or a short Physical Uplink Control Channel, sPUCCH.

As explained above, the communication network can be configured as a Long Term Evolution, LTE, network, or as a LTE-Advanced network, according to 3GPP specifications. In such a case, the reference signal comprises a DeModulation Reference Symbol, DMRS.

Figure 4 is a flowchart illustrating one embodiment of the method performed by a wireless device 450 of a wireless communication network, for transmitting signals in uplink. An uplink signal structure used by the wireless device defines transmission subframes divided into symbol periods. The wireless device is scheduled in uplink at sub-subframe (i.e. sTTI) scheduling intervals. A sub-subframe comprises at least one symbol period. Each sub-subframe is shorter than a subframe.

In a *receive control information message* step 310, a control information message is received from a network node for a sub-subframe scheduling interval. The control information message comprises uplink scheduling information assigned to the wireless device. The uplink scheduling information indicates a position and a length for at least one of a reference signal and data in the uplink sub-subframe, as disclosed in more detail in embodiments 1 to 6 above.

In one embodiment, the uplink scheduling information indicates a position and a length of respective reference signal and data in the uplink sub-subframe.

In one embodiment, the uplink scheduling information also indicates a length of the uplink sub-subframe.

The control information message can be specific for the wireless device. In other words, each wireless device can receive its own control information messages.

In one embodiment, the uplink scheduling information indicates a position and a length only for a reference signal, e.g. in accordance with embodiments 5 and 6 above.

In one embodiment, the uplink scheduling information indicates a position and a length for a plurality of reference signals, e.g. in accordance with embodiments 5 and 6 above.

In one embodiment, the uplink scheduling information indicates a position and a length only for data, e.g. in accordance with embodiments 5 and 6 above. In other words, no reference signals are then assigned in that particular uplink scheduling information.

The method also comprises a *transmit at least one of reference signal and data* step 320, where the wireless device transmits at least one of reference signal and data in the uplink sub-subframe according to the received control information message.

The at least one of reference signal and data can be transmitted on a short Physical Uplink Shared Channel, PUSCH, or a short Physical Uplink Control Channel, PUCCH.

As explained above, the communication network can be configured as a Long Term Evolution, LTE, network, or as a LTE-Advanced network, according to 3GPP specifications. In such a case, the reference signal comprises a DeModulation Reference Symbol, DMRS.

Using embodiments of the methods of Figures 3 and 4, great flexibility of how to allocate data for sTTI is achieved. This flexibility allows the allocation of any data and/or reference signals in any suitable configuration. Moreover, the signalling is provided in a very efficient manner.

### Example implementations of wireless device and network node

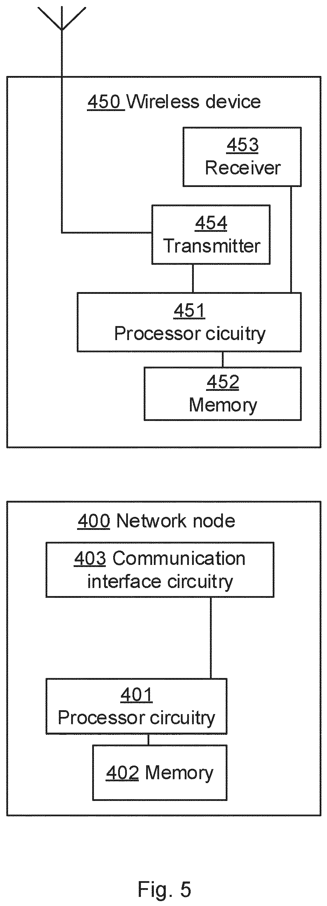

Figure 5 illustrates a block diagram of the network node 400 and the wireless device 450, in accordance with a particular embodiment. Here the wireless device 450 communicates with the network node 400.

The network node 400 comprises a communication interface circuitry 403 for communicating with the wireless device. If the network node is an eNodeB, the communication interface circuitry may comprise a transceiver circuitry which may be connected via an antenna port to a same or to different transmitting/receiving antennas. The network node also comprises control circuitry, which may comprise a processor circuitry 401 connected to a memory 402. The control circuitry is connected to the communication interface circuitry, which may e.g. provide receiver and transmitter and/or transceiver functionality. The network node 400 may be adapted to carry out any of the methods performed by the network node disclosed herein. The memory 402 may comprise instructions executable by said processor circuitry 401 whereby said network node 400 is operative to perform the methods described herein.

The wireless device 450 in Figure 5 comprises a receiver circuitry 453 and a transmitter circuitry 454 for communicating with the network. The receiver and transmitter circuitries may be connected via one or more antenna ports to a same or to different transmitting/receiving antennas. The wireless device 450 also comprises control circuitry, which may comprise a processor circuitry 451 connected to a memory 452. The control circuitry is connected to the transmitter and receiver circuitry, which provide receiver and transmitter functionality. The wireless device 450 may be adapted to carry out any of the methods performed by the wireless device disclosed herein. The memory 452 may comprise instructions executable by said processor circuitry 451 whereby said wireless device 450 is operative to perform the methods described herein.

In an alternative way to describe the embodiment in Figure 5, the network node 400 comprises a Central Processing Unit (CPU) which may be a single unit or a plurality of units. Furthermore, the network node 400 comprises at least one computer program product (CPP) in the form of a non-volatile memory, e.g. an EEPROM (Electrically Erasable Programmable Read-Only Memory), a flash memory or a disk drive. The CPP comprises a computer program, which comprises code means which when run on the network node 400 causes the CPU to perform steps of the procedure described earlier e.g. in conjunction with Figure 3. In other words, when said code means are run on the CPU, they correspond to the processing circuitry 401 of Figure 5.

Furthermore, the wireless device 450 may comprise a Central Processing Unit (CPU) which may be a single unit or a plurality of units, and at least one computer program product (CPP) in the form of a non-volatile memory, e.g. an EEPROM (Electrically Erasable Programmable Read-Only Memory), a flash memory or a disk drive. The CPP comprises a computer program, which comprises code means which when run on the wireless device 450 causes the CPU to perform steps of the procedure described earlier e.g. in conjunction with Figure 4. In other words, when said code means are run on the CPU, they correspond to the processing circuitry 451 of Figure 5.

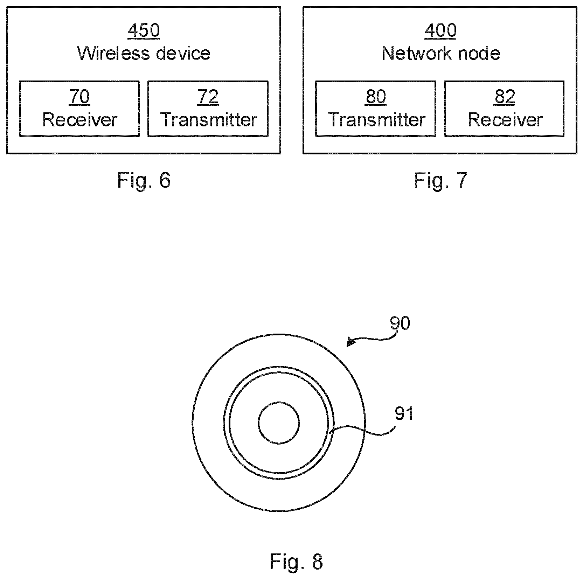

Figure 6 is a schematic diagram showing functional modules of the wireless device 450 of Figure 5 according to one embodiment. The modules are implemented using software instructions such as a computer program executing in the wireless device 450. Alternatively or additionally, the modules are implemented using hardware, such as any one or more of an ASIC (Application Specific Integrated Circuit), an FPGA (Field Programmable Gate Array), or discrete logical circuits. The modules correspond to the steps in the methods illustrated in Figure 4.

A receiver 70 corresponds to step 310. A transmitter 72 corresponds to step 320.

Figure 7 is a schematic diagram showing functional modules of the network node 400 of Figure 5 according to one embodiment. The modules are implemented using software instructions such as a computer program executing in the network node 400. Alternatively or additionally, the modules are implemented using hardware, such as any one or more of an ASIC (Application Specific Integrated Circuit), an FPGA (Field Programmable Gate Array), or discrete logical circuits. The modules correspond to the steps in the methods illustrated in Figure 3.

A transmitter 80 corresponds to step 210. A receiver corresponds to step 220.

Figure 8 shows one example of a computer program product 90 comprising computer readable means. On this computer readable means a computer program 91 can be stored, which computer program can cause a processor to execute a method according to embodiments described herein. In this example, the computer program product is an optical disc, such as a CD (compact disc) or a DVD (digital versatile disc) or a Blu-Ray disc. As explained above, the computer program product could also be embodied in a memory of a device, such as the memory 402 of the network node 400 and/or the memory 452 of the wireless device 450 in Figure 5. While the computer program 91 is here schematically shown as a track on the depicted optical disk, the computer program can be stored in any way which is suitable for the computer program product, such as a removable solid state memory, e.g. a Universal Serial Bus (USB) drive.

### Abbreviations

- BLER: Block Error Rate
- DCI: Downlink Control Information
- ePDCCH: enhanced Physical Downlink Control Channel
- LTE: Long Term Evolution
- MAC: Medium Access Control
- MCS: Modulation and Coding Scheme
- OFDM: Orthogonal Frequency Division Multiple Access
- PDCCH: Physical Downlink Control Channel
- PDSCH: Physical Downlink Shared Channel
- PRB: Physical Resource Block
- PUSCH: Physical Uplink Shared Channel
- RAT: Radio Access Technology
- RB: Resource Block
- RE: Resource Element
- RRC: Radio Resource Control
- SC-FDMA: Single Carrier- Frequency Division Multiple Access
- sPDCCH: short Physical Downlink Control Channel
- sPDSCH: short Physical Downlink Shared Channel
- sPUSCH: short Physical Uplink Shared Channel
- SF: SubFrame
- SSF: Sub-SubFrame
- TTI: Transmission Time Interval
- sTTI: short Transmission Time Interval

The invention has mainly been described above with reference to a few embodiments. However, as is readily appreciated by a person skilled in the art, other embodiments than the ones disclosed above are equally possible within the scope of the invention, as defined by the appended patent embodiments.

## Claims

1. A method performed by a User Equipment, UE, (450) of a wireless communication network for transmitting signals in uplink, wherein an uplink signal structure defines subframes divided into Orthogonal Frequency Division Multiplexing, OFDM, symbols, the method comprising:
receiving (310) a control information message from a Base Station, BS, of the wireless communication network, the control information message comprising uplink scheduling information for a short scheduling interval assigned to the UE, the short scheduling interval being shorter in time than a subframe and comprising at least one OFDM symbol, the uplink scheduling information indicating: a length of the short scheduling interval in number of OFDM symbols; and a position of one or more OFDM symbols occupied by a demodulation reference signal, DMRS, in the short scheduling interval; and
transmitting (320) the DMRS in the short scheduling interval according to the received control information message.

2. The method according to claim 1, wherein the uplink scheduling information comprises a bit sequence.

3. The method according to any one of claims 1 to 2, wherein the control information message is specific for the UE.

4. A User Equipment, UE, (450) configured to transmit signals in uplink and to use an uplink signal structure defining subframes divided into Orthogonal Frequency Division Multiplexing, OFDM, symbols, the UE comprising:
means for receiving a control information message from a Base Station, BS, (400) of a wireless communication network (8), the control information message comprising uplink scheduling information for a short scheduling interval assigned to the UE, the short scheduling interval being shorter in time than a subframe and comprising at least one OFDM symbol, the uplink scheduling information indicating: a length of the short scheduling interval in number of OFDM symbols; and a position of one or more OFDM symbols occupied by a demodulation reference signal, DMRS, in the short scheduling interval; and
means for transmitting the DMRS in the short scheduling interval according to the received control information message.

5. The UE according to claim 4, wherein the uplink scheduling information comprises a bit sequence.

6. The UE according to any one of claims 4 to 5, wherein the control information message is specific for the UE.

7. A method performed by a Base Station, BS, (400) of a wireless communication network (8) for scheduling a User Equipment, UE, (450) in uplink, wherein an uplink signal structure defines subframes divided into Orthogonal Frequency Division Multiplexing, OFDM, symbols, the method comprising:
transmitting (210) a control information message to the UE, the control information message comprising uplink scheduling information for a short scheduling interval assigned to the UE, the short scheduling interval being shorter in time than a subframe and comprising at least one OFDM symbol, the uplink scheduling information indicating: a length of the short scheduling interval in number of OFDM symbols; and a position of one or more OFDM symbols occupied by a demodulation reference signal, DMRS, in the short scheduling interval.

8. The method according to claim 7, wherein the uplink scheduling information comprises a bit sequence.

9. The method according to any one of claims 7 to 8, wherein the control information message is specific for the UE.

10. The method according to any of claims 7 to 9, further comprising:
receiving (220) the DMRS from the UE in the short scheduling interval, according to the transmitted control information message.

11. A Base Station, BS, (400) configured for a wireless communication network (8) and further configured to schedule a User Equipment, UE, (450) in uplink and to use an uplink signal structure defining subframes divided into Orthogonal Frequency Division Multiplexing, OFDM, symbols, the BS comprising:
means for transmitting a control information message to the UE, the control information message comprising uplink scheduling information for a short scheduling interval assigned to the UE, the short scheduling interval being shorter in time than a subframe and comprising at least one OFDM symbol, the uplink scheduling information indicating: a length of the short scheduling interval in number of OFDM symbols; and a position of one or more OFDM symbols occupied by a demodulation reference signal, DMRS, in the short scheduling interval.

12. The BS (400) according to claim 11, wherein the uplink scheduling information comprises a bit sequence.

13. The BS (400) according to any one of claims 11 to 12, wherein the control information message is specific for the UE.

14. The BS (400) according to any of claims 11 to 13, further comprising means for receiving the DMRS from the UE in the short scheduling interval, according to the transmitted control information message.

## Patentansprüche

1. Verfahren zum Senden von Signalen auf dem Uplink, das von einer Benutzereinrichtung, UE, (450) eines drahtlosen Kommunikationsnetzwerks durchgeführt wird, wobei eine Uplink-Signalstruktur Unterrahmen definiert, die in Orthogonal Frequency Division Multiplexing-Symbole, OFDM-Symbole, unterteilt sind, wobei das Verfahren Folgendes umfasst:
Empfangen (310) einer Steuerinformationsnachricht von einer Basisstation, BS, des drahtlosen Kommunikationsnetzwerks, wobei die Steuerinformationsnachricht Uplink-Dispositionsinformationen für ein kurzes Dispositionsintervall umfasst, das der UE zugewiesen ist, wobei das kurze Dispositionsintervall zeitlich kürzer als ein Unterrahmen ist und mindestens ein OFDM-Symbol umfasst, wobei die Uplink-Dispositionsinformationen Folgendes angeben: eine Länge des kurzen Dispositionsintervalls in Anzahl von OFDM-Symbolen; und eine Position eines oder mehrerer OFDM-Symbole, die von einem Demodulationsreferenzsignal, DMRS, in dem kurzen Dispositionsintervall belegt sind; und
Senden (320) des DMRS in dem kurzen Dispositionsintervall gemäß der empfangenen Steuerinformationsnachricht.

2. Verfahren nach Anspruch 1, wobei die Uplink-Dispositionsinformationen eine Bitfolge umfassen.

3. Verfahren nach einem der Ansprüche 1 bis 2, wobei die Steuerinformationsnachricht spezifisch für die UE ist.

4. Benutzereinrichtung, UE, (450), die dazu konfiguriert ist, Signale auf dem Uplink zu senden und eine Uplink-Signalstruktur zu verwenden, die Unterrahmen definiert, die in Orthogonal Frequency Division Multiplexing-Symbole, OFDM-Symbole, unterteilt sind, wobei die UE Folgendes umfasst:
Mittel zum Empfangen einer Steuerinformationsnachricht von einer Basisstation, BS, (400) eines drahtlosen Kommunikationsnetzwerks (8), wobei die Steuerinformationsnachricht Uplink-Dispositionsinformationen für ein kurzes Dispositionsintervall umfasst, das der UE zugewiesen ist, wobei das kurze Dispositionsintervall zeitlich kürzer als ein Unterrahmen ist und mindestens ein OFDM-Symbol umfasst, wobei die Uplink-Dispositionsinformationen Folgendes angeben: eine Länge des kurzen Dispositionsintervalls in Anzahl von OFDM-Symbolen; und eine Position eines oder mehrerer OFDM-Symbole, die von einem Demodulationsreferenzsignal, DMRS, in dem kurzen Dispositionsintervall belegt sind; und
Mittel zum Senden des DMRS in dem kurzen Dispositionsintervall gemäß der empfangenen Steuerinformationsnachricht.

5. UE nach Anspruch 4, wobei die Uplink-Dispositionsinformationen eine Bitfolge umfassen.

6. UE nach einem der Ansprüche 4 bis 5, wobei die Steuerinformationsnachricht spezifisch für die UE ist.

7. Verfahren zum Disponieren einer Benutzereinrichtung, UE, (450) auf dem Uplink, das von einer Basisstation, BS, (400) eines drahtlosen Kommunikationsnetzwerks (8) durchgeführt wird, wobei eine Uplink-Signalstruktur Unterrahmen definiert, die in Orthogonal Frequency Division Multiplexing-Symbole, OFDM-Symbole, unterteilt sind, wobei das Verfahren Folgendes umfasst:
Senden (210) einer Steuerinformationsnachricht an die UE, wobei die Steuerinformationsnachricht Uplink-Dispositionsinformationen für ein kurzes Dispositionsintervall umfasst, das der UE zugewiesen ist, wobei das kurze Dispositionsintervall zeitlich kürzer als ein Unterrahmen ist und mindestens ein OFDM-Symbol umfasst, wobei die Uplink-Dispositionsinformationen Folgendes angeben: eine Länge des kurzen Dispositionsintervalls in Anzahl von OFDM-Symbolen; und eine Position eines oder mehrerer OFDM-Symbole, die von einem Demodulationsreferenzsignal, DMRS, in dem kurzen Dispositionsintervall belegt sind.

8. Verfahren nach Anspruch 7, wobei die Uplink-Dispositionsinformationen eine Bitfolge umfassen.

9. Verfahren nach einem der Ansprüche 7 bis 8, wobei die Steuerinformationsnachricht spezifisch für die UE ist.

10. Verfahren nach einem der Ansprüche 7 bis 9, ferner umfassend:
Empfangen (220) des DMRS von der UE in dem kurzen Dispositionsintervall gemäß der empfangenen Steuerinformationsnachricht.

11. Basisstation, BS, (400), die für ein drahtloses Kommunikationsnetzwerk (8) konfiguriert ist und ferner dazu konfiguriert ist, eine Benutzereinrichtung, UE, (450) auf dem Uplink zu disponieren und eine Uplink-Signalstruktur zu verwenden, die Unterrahmen definiert, die in Orthogonal Frequency Division Multiplexing-Symbole, OFDM-Symbole, unterteilt sind, wobei die BS Folgendes umfasst:
Mittel zum Senden einer Steuerinformationsnachricht an die UE, wobei die Steuerinformationsnachricht Uplink-Dispositionsinformationen für ein kurzes Dispositionsintervall umfasst, das der UE zugewiesen ist, wobei das kurze Dispositionsintervall zeitlich kürzer als ein Unterrahmen ist und mindestens ein OFDM-Symbol umfasst, wobei die Uplink-Dispositionsinformationen Folgendes angeben: eine Länge des kurzen Dispositionsintervalls in Anzahl von OFDM-Symbolen; und eine Position eines oder mehrerer OFDM-Symbole, die von einem Demodulationsreferenzsignal, DMRS, in dem kurzen Dispositionsintervall belegt sind.

12. BS (400) nach Anspruch 11, wobei die Uplink-Dispositionsinformationen eine Bitfolge umfassen.

13. BS (400) nach einem der Ansprüche 11 bis 12, wobei die Steuerinformationsnachricht spezifisch für die UE ist.

14. BS (400) nach einem der Ansprüche 11 bis 13, ferner umfassend Mittel zum Empfangen des DMRS von der UE in dem kurzen Dispositionsintervall gemäß der gesendeten Steuerinformationsnachricht.

## Revendications

1. Procédé réalisé par un équipement utilisateur, UE, (450) d'un réseau de communication sans fil pour transmettre des signaux en liaison montante, dans lequel une structure de signal en liaison montante définit des sous-trames divisées en symboles de multiplexage par répartition de fréquence orthogonale, OFDM, le procédé comprenant :
la réception (310) d'un message d'informations de commande depuis une station de base, BS, du réseau de communication sans fil, le message d'informations de commande comprenant des informations de planification en liaison montante pour un intervalle de planification court attribué à l'UE, l'intervalle de planification court étant plus court dans le temps qu'une sous-trame et comprenant au moins un symbole OFDM, les informations de planification en liaison montante indiquant : une longueur de l'intervalle de planification court en nombre de symboles OFDM ; et une position d'un ou plusieurs symboles OFDM occupés par un signal de référence de démodulation, DMRS, dans l'intervalle de planification court ; et
la transmission (320) du DMRS dans l'intervalle de planification court selon le message d'informations de commande reçu.

2. Procédé selon la revendication 1, dans lequel les informations de planification en liaison montante comprennent une séquence binaire.

3. Procédé selon l'une quelconque des revendications 1 à 2, dans lequel le message d'informations de commande est spécifique à l'UE.

4. Equipement utilisateur, UE, (450) configuré pour transmettre des signaux en liaison montante et pour utiliser une structure de signal en liaison montante définissant des sous-trames divisées en symboles de multiplexage par répartition de fréquence orthogonale, OFDM, l'UE comprenant :
des moyens pour recevoir un message d'informations de commande depuis une station de base, BS, (400) d'un réseau de communication sans fil (8), le message d'informations de commande comprenant des informations de planification en liaison montante pour un intervalle de planification court attribué à l'UE, l'intervalle de planification court étant plus court dans le temps qu'une sous-trame et comprenant au moins un symbole OFDM, les informations de planification en liaison montante indiquant : une longueur de l'intervalle de planification court en nombre de symboles OFDM ; et une position d'un ou plusieurs symboles OFDM occupés par un signal de référence de démodulation, DMRS, dans l'intervalle de planification court ; et
des moyens pour transmettre le DMRS dans l'intervalle de planification court selon le message d'informations de commande reçu.

5. UE selon la revendication 4, dans lequel les informations de planification en liaison montante comprennent une séquence binaire.

6. UE selon l'une quelconque des revendications 4 à 5, dans lequel le message d'informations de commande est spécifique à l'UE.

7. Procédé réalisé par un station de base, BS, (400) d'un réseau de communication sans fil (8) pour planifier un équipement utilisateur, UE, (450) en liaison montante, dans lequel une structure de signal en liaison montante définit des sous-trames divisées en symboles de multiplexage par répartition de fréquence orthogonale, OFDM, le procédé comprenant :
la transmission (210) d'un message d'informations de commande à l'UE, le message d'informations de commande comprenant des informations de planification en liaison montante pour un intervalle de planification court attribué à l'UE, l'intervalle de planification court étant plus court dans le temps qu'une sous-trame et comprenant au moins un symbole OFDM, les informations de planification en liaison montante indiquant : une longueur de l'intervalle de planification court en nombre de symboles OFDM ; et une position d'un ou plusieurs symboles OFDM occupés par un signal de référence de démodulation, DMRS, dans l'intervalle de planification court.

8. Procédé selon la revendication 7, dans lequel les informations de planification en liaison montante comprennent une séquence binaire.

9. Procédé selon l'une quelconque des revendications 7 à 8, dans lequel le message d'informations de commande est spécifique à l'UE.

10. Procédé selon l'une quelconque des revendications 7 à 9, comprenant en outre :
la réception (220) du DMRS depuis l'UE dans l'intervalle de planification court, selon le message d'informations de commande transmis.

11. Station de base, BS, (400) configurée pour un réseau de communication sans fil (8) et configurée en outre pour planifier un équipement utilisateur, UE, (450) en liaison montante et pour utiliser une structure de signal en liaison montante définissant des sous-trames divisées en symboles de multiplexage par répartition de fréquence orthogonale, OFDM, la BS comprenant :
des moyens pour transmettre un message d'informations de commande à l'UE, le message d'informations de commande comprenant des informations de planification en liaison montante pour un intervalle de planification court attribué à l'UE, l'intervalle de planification court étant plus court dans le temps qu'une sous-trame et comprenant au moins un symbole OFDM, les informations de planification en liaison montante indiquant : une longueur de l'intervalle de planification court en nombre de symboles OFDM ; et une position d'un ou plusieurs symboles OFDM occupés par un signal de référence de démodulation, DMRS, dans l'intervalle de planification court.

12. BS (400) selon la revendication 11, dans laquelle les informations de planification en liaison montante comprennent une séquence binaire.

13. BS (400) selon l'une quelconque des revendications 11 à 12, dans laquelle le message d'informations de commande est spécifique à l'UE.

14. BS (400) selon l'une quelconque des revendications 11 à 13, comprenant en outre des moyens pour recevoir le DMRS depuis l'UE dans l'intervalle de planification court, selon le message d'informations de commande transmis.
